# EUROPEAN PATENT SPECIFICATION

(11) **EP 0 518 518 B1**
(45) Date of publication and mention of the grant of the patent: **02.09.1998**
(21) Application number: 92304740.1
(22) Date of filing: 26.05.1992
(51) Int. Cl.: G02B 6/44

(54) **Voltage stress protection device**
Spannungsbelastung Schutzvorrichtung
Dispositif de protection pour la sollicitation de tension

(30) Priority: 01.06.1991 GB 9111810
(43) Date of publication of application: 16.12.1992
(73) Proprietor: PIRELLI GENERAL plc, London W1X 6BU (GB)
(72) Inventor: Parry, Mark James, Ware, Herts, SG12 0BD (GB); Brewer, David Andrew, Newport, Gwent, NP1 7ED (GB)
(74) Representative: Abbie, Andrew Kenneth

(56) References cited:
- EP-A- 112 163
- EP-A- 216 548
- GB-A- 2 234 604

## Description

This invention relates to a voltage stress protection device on a dielectric cable disposed in an electric field.

A recent development in fibre optic communications technology has been the introduction of all-dielectric aerial cables which are suspended from the support pylons of an electric transmission line. Such a cable construction is described in US-A-4,859,025.

A cable of this type may be suspended from a pylon via a suspension clamp which is mounted e.g. at the centre of the bottom cross-tree and which engages a metallic sheath support structure disposed on the surface of the dielectric cable. This sheath support structure extends a short distance either side of the support clamp and effectively spreads the tensile loading imposed by the clamp on the cable.

The support clamp and the sheath support structure, which is typically formed by wire armouring, are coupled to earth potential via the metal framework of the pylon. However, the structure is within a few metres of the power conductors carried on the bottom cross-tree and is thus in a region of high electrical field intensity. It has been found that under such conditions a corona discharge may take place at the ends of the wire armouring. The electrical stresses, and the ozone generated by the discharge, can cause severe degradation of this region of the cable over a period of time.

GB-A-2234604 discloses an electric field protection device on a dielectric cable disposed in an electric field and provided with a metallic sheath support structure over part of its length, the device including a tubular conductive portion providing electrical contact to the sheath support structure. The further portion is toroidal and the device reduces the field intensity at the cable surface. However, under certain weather conditions, some corona damage to the cable may still be experienced.

The object of the present invention is to minimise or to overcome this disadvantage.

According to the invention there is provided an electric field protection device on a dielectric cable disposed in an electric field and provided with a metallic sheath support structure over part of its length, the device including a tubular conductive portion providing electrical contact to the sheath support structure, and a further conductive portion coupled to the tubular portion and extending around the cable in a direction away from the sheath support structure characterised in that said further conductive portion is a generally conical or bell-shaped portion extending from a smaller end thereof, which is coupled to said tubular portion, away from said tubular portion to a larger diameter end portion having a lip of relatively small radius of curvature such that a region of high intensity electric field is formed at said larger diameter end portion whereby any corona discharge takes place remote from the cable surface.

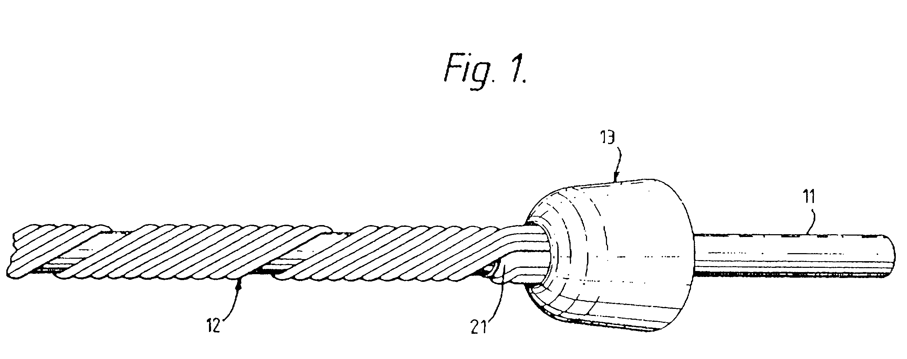

An embodiment of the invention will now be described with reference to the accompanying drawings, in which:-
Fig. 1 is a general view of a dielectric cable fitted with an electric field protective device, and
Fig. 2 is a cross-sectional view of the protective device of Fig.1.

Referring to the drawings, a dielectric aerial cable 11 is supported via a clamp (not shown) which engages a length of steel wire armour 12 wound on to the cable 11 to form a metallic sheath support structure for the cable. The armour provides a degree of rigidity in the clamp region and thus prevents extensive bending of the cable at its support points. The free ends of the armour wires 12 are terminated by an electric field protection device 13 which is in electrical contact with the armour wires. It will be appreciated that a similar protection device (not shown) is fitted to the other ends of the wires 12. Typically the protection device is formed from a non-corroding metal such as stainless steel, aluminium or an aluminium alloy.

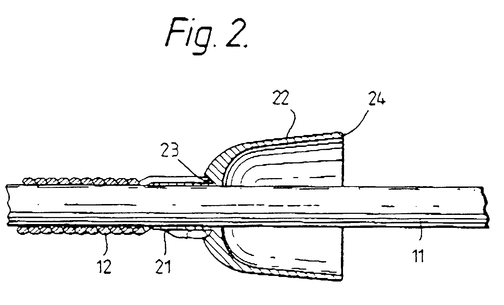

As shown in Fig. 2, the protection device comprises a tubular stem portion 21, which may be inserted between the armour wires 12 and the cable 11, and a generally bell-shaped portion 22. The generally bell-shaped portion 22 extends from a smaller diameter end thereof, which is coupled to the tubular portion 21, away from the tubular portion to a larger end portion. The outer surface of the smaller diameter end of the bell-shaped portion 22 may be provided with an annular groove or recess 23 for recessing the ends of the armour wires 12. Typically the device 13 has a longitudinal split whereby it may be fitted to an installed cable.

The mouth of the bell-shaped portion 22 at the larger diameter end thereof has a lip 24 of relatively small radius of curvature whereby, in use, a high intensity electric field region is formed, this region being effectively remote from the cable surface. This ensures that any corona discharge takes place at a distance from the cable surface thus significantly reducing the risk of charge to the cable.

## Claims

1. An electric field protection device on a dielectric cable (11) disposed in an electric field and provided with a metallic sheath support structure (12) over part of its length, the device including a tubular conductive portion (21) providing electrical contact to the sheath support structure (12), and a further conductive portion (22) coupled to the tubular portion (21) and extending around the cable (11) in a direction away from the sheath support structure, characterised in that said further conductive portion is a generally conical or bell-shaped portion (22) extending from a smaller end thereof, which is coupled to said tubular portion (21), away from said tubular portion to a larger diameter end portion having a lip (24) of relatively small radius of curvature such that a region of high intensity electric field is formed at said larger diameter end portion whereby any corona discharge takes place remote from the cable surface.

2. A device as claimed in claim 1 wherein said tubular portion (21) fits between the sheath support structure (12) and the cable (11).

3. A device as claimed in claim 2, wherein said bell-shaped portion has an annular groove recessing the end of the sheath support structure.

## Patentansprüche

1. Vorrichtung zum Schutz gegen elektrische Felder auf einem in einem elektrischen Feld angeordneten dielektrischen Kabel (11), das eine Stützstruktur (12) in Form einer Metallummantelung über einen Teil seiner Länge aufweist, wobei die Vorrichtung einen röhrenförmigen leifähigen Teil (21) aufweist, der einen elektrischen Kontakt zur Ummantelungs-Stützstruktur (12) herstellt, sowie einen weiteren leitfähigen Teil (22), der mit dem röhrenförmigen Teil (21) verbunden ist und sich um das Kabel (11) herum in einer Richtung, die von der Ummantelungs-Stützstruktur wegführt, erstreckt, dadurch gekennzeichnet, daß der weitere leitfähige Teil ein allgemein konisch oder glockenförmig ausgebildetes Element (22) ist, das sich von seinem auf dem Röhrenteil (21) befestigten engeren Ende aus und vom Röhrenteil weg zu einem Abschlußteil mit einem größeren Durchmesser hin erstreckt, das eine Lippe (24) eines relativ kleinen Krümmungsradius aufweist, so daß ein Bereich eines elektrischen Felds mit einer großen Stärke an diesem Abschlußteil mit größerem Durchmesser gebildet wird, wodurch eventuelle Glimmentladungen von der Kabeloberfläche entfernt stattfinden.

2. Vorrichtung nach Anspruch 1, bei der der röhrenförmige Teil (21) zwischen die Ummantelungs-Stützstruktur (12) und das Kabel (11) paßt.

3. Vorrichtung nach Anspruch 2, bei der der glockenförmige Teil eine ringförmige Nut aufweist, die eine Vertiefung für das Ende der Ummantelungs-Stützstruktur bildet.

## Revendications

1. Dispositif de protection contre les champs électriques sur un câble diélectrique (11) disposé dans un champ électrique et pourvu, sur une partie de sa longueur, d'une structure (12) de support formant gaine métallique le dispositif comprenant une partie conductrice tubulaire (21) assurant un contact électrique avec la structure (12) de support de gaine, et une autre partie conductrice (22) couplée à la partie tubulaire (21) et s'étendant autour du câble (11) dans une direction d'éloignement par rapport à la structure de support formant gaine, caractérisé en ce que ladite autre partie conductrice est une partie (22) globalement conique ou en forme de cloche s'étendant depuis sa plus petite extrémité, qui est couplée à ladite partie tubulaire (21), dans une direction d'éloignement par rapport à de ladite partie tubulaire jusqu'à une partie d'extrémité de plus grand diamètre comportant une lèvre (24) ayant un rayon de courbure relativement petit de sorte qu'une région de champ électrique de forte intensité est formée au niveau de ladite partie d'extrémité de plus grand diamètre, grâce à quoi toute décharge par effet corona a lieu loin de la surface du câble.

2. Dispositif selon la revendication 1, dans lequel ladite partie tubulaire (21) est emmanchée entre la structure (12) de support de gaine et le câble (11).

3. Dispositif selon la revendication 2, dans lequel ladite partie en forme de cloche comporte une rainure annulaire encastrant l'extrémité de la structure de support de gaine.
